Europäisches Patentamt

European Patent Office

Office européen des brevets

(11) Publication number: **0 350 060**
**A2**

# EUROPEAN PATENT APPLICATION

(21) Application number: 89112471.1

(22) Date of filing: 07.07.89

(51) Int. Cl.⁴: **B29C 67/18 , B32B 7/00**

(30) Priority: 07.07.88 JP 169328/88

(43) Date of publication of application:
10.01.90 Bulletin 90/02

(84) Designated Contracting States:
AT BE CH DE FR GB IT LI NL SE

(71) Applicant: SOMAR CORPORATION
11-2, Ginza 4-chome Chuo-ku
Tokyo(JP)

(72) Inventor: Seki, Mitsuhiro
No. 5-14, Toyo 2-chome Koto-ku
Tokyo(JP)

(74) Representative: Boeters, Hans Dietrich, Dr. et
al
Boeters & Bauer, Patentanwälte
Thomas-Wimmer-Ring 14
D-8000 München 22(DE)

(54) Thin film feed member for thin film adhering apparatus.

(57) A thin film adhesion apparatus includes a thin film feed member with a suction surface having rows of transversely extending grooves therein. Each groove has suction holes for vacuum sucking a thin film to the suction surface of the feed member. Each row groove is discontinuous in the transverse direction and consists of groove sections which are strategically placed so that each standard width thin film will cover completely, and just barely, a set of groove sections, thereby insuring that no air gap will exist between thin film and groove sections and preventing wrinkling of the thin film.

FIG. 1

EP 0 350 060 A2

# THIN FILM FEED MEMBER FOR THIN FILM ADHERING APPARATUS

## BACKGROUND OF THE INVENTION

The present invention relates to the art of adhering a thin film to a base plate, and particularly relates to a thin film feed member in a thin film adhering apparatus for feeding a thin film to a base plate.

In a printed circuit board for an electronic appliance such as a computer, wirings are made of copper or the like in a prescribed pattern on one or both sides of an electrically insulating base plate. In a conventional thin film adhering apparatus, in which a thin stratified film consisting of a protective film and a resist film or the like is adhered to an electrically insulating base plate in a process of manufacturing a printed circuit board, the leading edge of the thin stratified film is sucked onto a suction surface of a thin stratified film tentative sticking member by a vacuum at the start of the adhering operation so that the leading edge of the film is moved toward the base plate as the leading edge remains sucked on the suction surface, as described in the Japanese Patent Application (OPI) No. 162016/85 (the term "OPI" as used herein means an "unexamined published application") and Japanese Patent Application No. 264236/86 corresponding to U.S. Patent Application No. 07/116,819. The base plate is then conveyed between a pair of pressure sticking rollers so that the thin film is adhered to the base plate. A block supporting the thin film tentative sticking member is operated so that the continuous thin film is moved to the vicinity of a thin film tentative sticking station on which the continuous thin film is stuck to the base plate. During the movement of the thin film to the vicinity of the station, the film is cut off in the transverse direction thereof by a cutter as the film remains sucked on the suction surface of a thin film feed member integrally coupled to the thin film tentative sticking member. The continuous thin film can be cut to a prescribed length corresponding to the size of the base plate, without suspending the adhesion of the thin film to the base plate. The thin film feed member functions so that the thin film is sucked and held on the member by suction at the time of the tentative sticking of the thin film and the cutoff thereof.

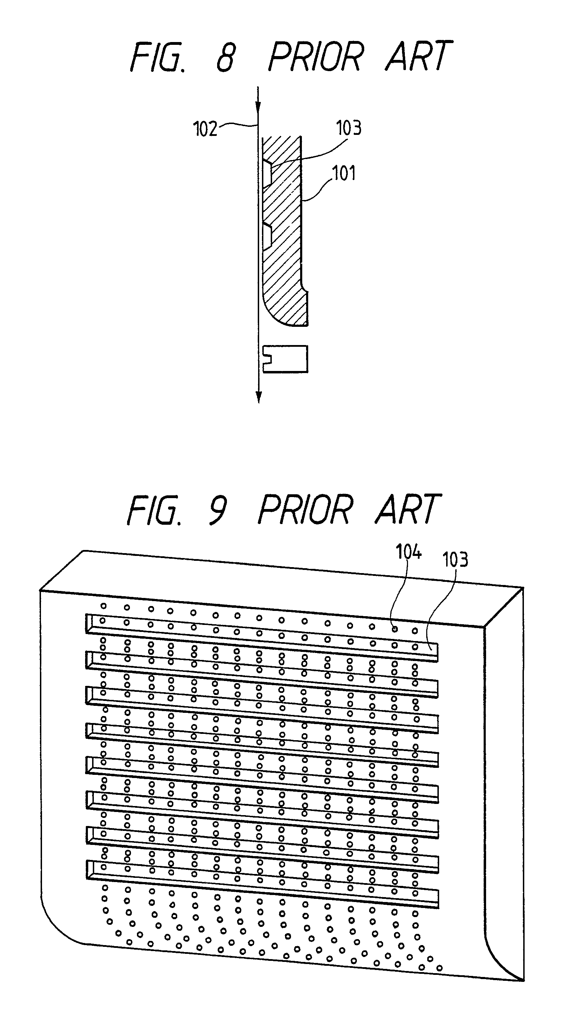

As shown in Figs. 8 and 9, the suction surface of the thin film feed member has grooves 103 extending in the transverse direction of the thin film 102, and has vacuum suction holes 104 in both the grooved and ungrooved portions of the suction surface.

Although a thin film to be adhered to a base plate by the conventional apparatus may have several possible widths, such as, 195 mm, 245 mm, 295 mm, 330 mm, 400 mm, 495 mm. 600 mm and so forth, the grooves 103 of the suction surface of the thin film feed member are formed and disposed based on only a single width of a thin film, such as 600 mm, for example. For that reason, when a thin film whose width is smaller than 600 mm is sucked onto the thin film feed member so as to be moved toward the base plate, a gap arises between the film and the groove 103 such that several of the holes 104 will not be covered by the thin film. Since gas sucked through the vacuum suction holes 104 leaks through the gap to make it impossible to securely suck the thin film onto the suction surface of the thin film feed member, the thin film is likely to be wrinkled so as to result in a defective product.

## SUMMARY OF THE INVENTION

The present invention was made in order to solve the above problem. Accordingly, it is an object of the present invention to provide a thin film feed member on which a supplied thin film can be securely vacuum adhered without wrinkling the film, regardless of the size of the film.

The thin film feed member in accordance with the present invention has rows of grooves, each row having a longitudinal direction transverse to the feed direction of the thin film. Each row groove is discontinuous, in the longitudinal direction, consisting of groove sections whose edges rise to the feed surface of the film feed member. The spacing of the groove sections are such that each standard thin film width will completely cover a number of groove sections, without introduction of air gaps. The center groove section per row is preferably of a length slightly less than the smallest standard width of thin film, and the extreme end groove sections per row are positioned to be slightly inward of the largest standard width of thin film. The other groove sections are likewise positioned relative to standard or expected widths of thin films to be fed by the thin film feeder member. In this way each thin film will completely cover groove sections, with no partial covering as in the prior art. The consequence is that the vacuum attraction is stronger, more efficient and leads to secure adhesion of the film to the feeder.

The suction chamber of the thin film feed member, which is for the thin film suction surface thereof, may be divided into a prescribed number of suction chambers at intervals in the transverse direction of each of the thin films depending on the widths of the films.

The thin film feed member provided in accordance with the present invention has a thin film suction surface having grooves which are discontinuous, and the portions of the groove section depends on the widths of the films to be fed. This arrangement prevents a gas leak gap from occurring between each of the grooves and each of the thin films. As a result, each of the thin films can be securely vacuum adhered onto the thin film suction surface of the member without wrinkling the film. If the suction chamber of the member is divided into the plural suction chambers at the intervals in the transverse direction of each of the thin films depending on the widths of the films, each film can be securely and efficiently sucked onto the thin film suction surface of the member.

BRIEF DESCRIPTION OF THE DRAWINGS

Fig. 1 is a schematic view of a thin film adhering apparatus including a thin film feed member which is an embodiment of the present invention;

Fig. 2 is a front view of the member;

Fig. 3 is a perspective cutaway view of the member;

Fig. 4 is a sectional view of the member along a line A-A shown in Fig. 2;

Figs. 5(a) - 5(c) are sectional views of examples of the member along a line B-B shown in Fig. 2;

Figs. 6(a) - 6(b) are sectional views of modifications of each groove of the member;

Fig. 7 is a front view of a modification of the suction chamber of the member; and

Figs. 8 and 9 are views for describing the problem of a conventional thin film feed member for a thin film sticking apparatus.

DETAILED DESCRIPTION OF A PREFERRED EMBODIMENT

An embodiment of the present invention is described with reference to the drawings attached hereto. The mutually equivalent portions shown in the drawings are denoted by the same reference symbols therein, and not repeatedly for each Figure described.

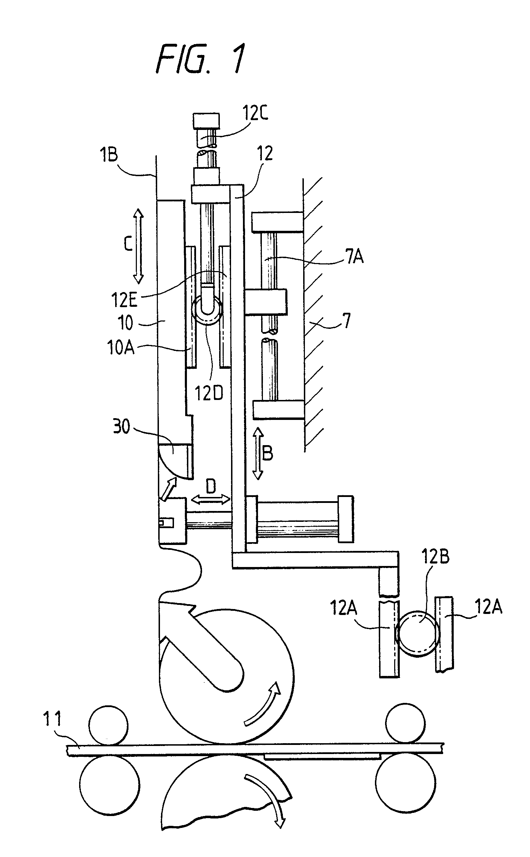

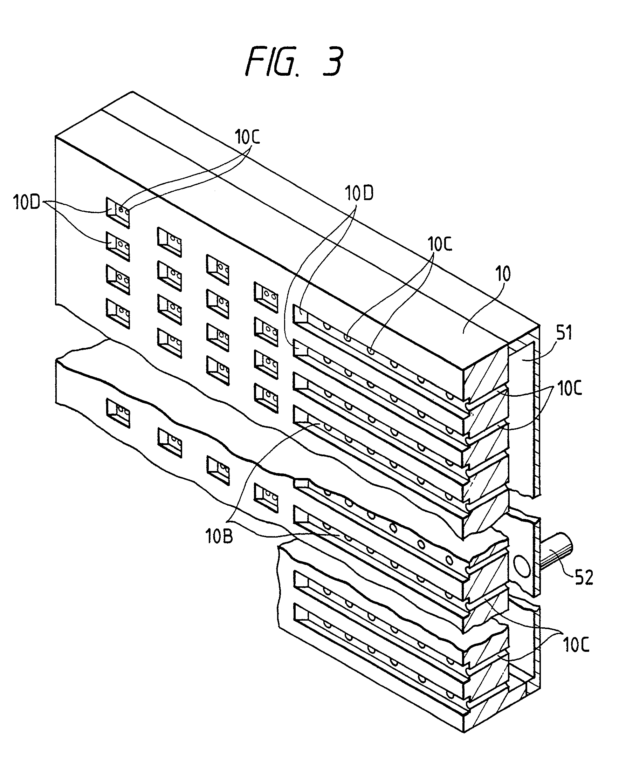

Fig. 1 shows a thin film feed member 10, which, is hereinafter referred to as the main vacuum suction plate. Except for the main vacuum suction plate 10, the thin film adhesion apparatus is the same as that disclosed in the above-mentioned Japanese Patent Application No. 264236/86. For that reason, the apparatus is not described in detail herein. The main vacuum suction plate 10 is provided on a support member 12 which is moved toward and away from the base plate 11 in directions B shown by arrows in Fig. 1. The support member 12 is provided on the body 7 of the apparatus so that the member can be slid on a guide member 7A in the directions B.

The plate 10 and member 12 illustrated constitutes an upper main vacuum suction plate and an upper support member. In addition, there is provided (though not illustrated) a lower plate 10 and a lower member 12 provided under the conveyance passage of the base plate 11. The upper support member 12 and the lower support member 12 are movably coupled to each other by a rack and pinion mechanism so that the support members are simultaneously moved toward and away from each other by a driver provided on the lower support member. The rack and pinion mechanism includes racks 12A provided on the support members 12, and a pinion 12B engaged with the racks. The driver is made of a pneumatic cylinder, for example. However, the driver may be made of a hydraulic cylinder, an electromagnetic cylinder, a combination of a step motor and a mechanism for transmitting a motive power of the motor to the support members 12, or the like.

The main vacuum suction plates 10 are provided on the support member 12 in such a manner that each of the main vacuum suction plates is moved toward and away from the base plate 11, in directions C shown by arrows in Fig. 1, by a rack and pinion mechanism and a driver 12C provided on the support member. The rack and pinion mechanism includes a pinion 12D coupled to the driver 12C, a rack 12E provided on the support member 12, and another rack 10A provided on the main vacuum suction plate 10. The driver 12C may be of the same type as that for the support members 12.

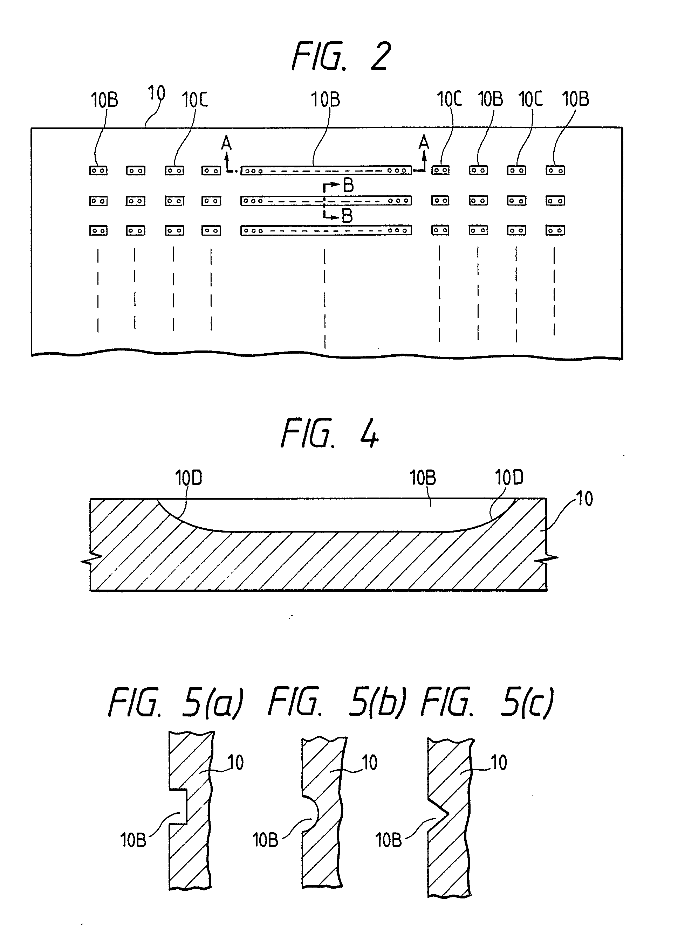

As shown in Fig. 2, each main vacuum suction plate 10 has a plurality of rows of groove sections 10B. Each row groove being discontinuous and extending in the direction of the width of the plate, nearly perpendicularly across the direction of feed of the thin stratified film 1B and consisting of groove sections 10B disposed at intervals in the direction of the feed thereof. Every groove section 10B has a prescribed length and is positioned at a prescribed interval so as to form a row extending in the direction of the width of the thin stratified film 1B, to appropriately cope with thin stratified films of different widths.

The extreme end groove sections 10B are positioned so that the largest standard or expected width of thin film will just barely cover the extreme groove sections. The central groove section is positioned and has a length so that the smallest standard or expected width of thin film will just barely cover the entire central groove section. The remaining groove sections are positioned and sized accordingly to accommodate other intermediate standard or expected widths of thin films.

As a result, a gas leak gap will not occur between the grooves 10B and each of thin stratified films of all applicable widths which are 195 mm, 245 mm, 295 mm, 330 mm, 400 mm, 495 mm and 600 mm, for example, when the film is sucked onto the main vacuum suction plate 10. A plurality of vacuum suction holes 10C for sucking the thin stratified film 1B onto the plate 10 are provided in the plate at the bottom of each of the grooves 10B, and, as shown in Fig. 3, are connected to a vacuum source such as a vacuum pump through a single suction chamber 51 and a single gas discharge pipe 52. The bottom of each groove 10B curves to the surface of the main vacuum suction plate 10 at both the ends of the groove, as shown in Fig. 4.

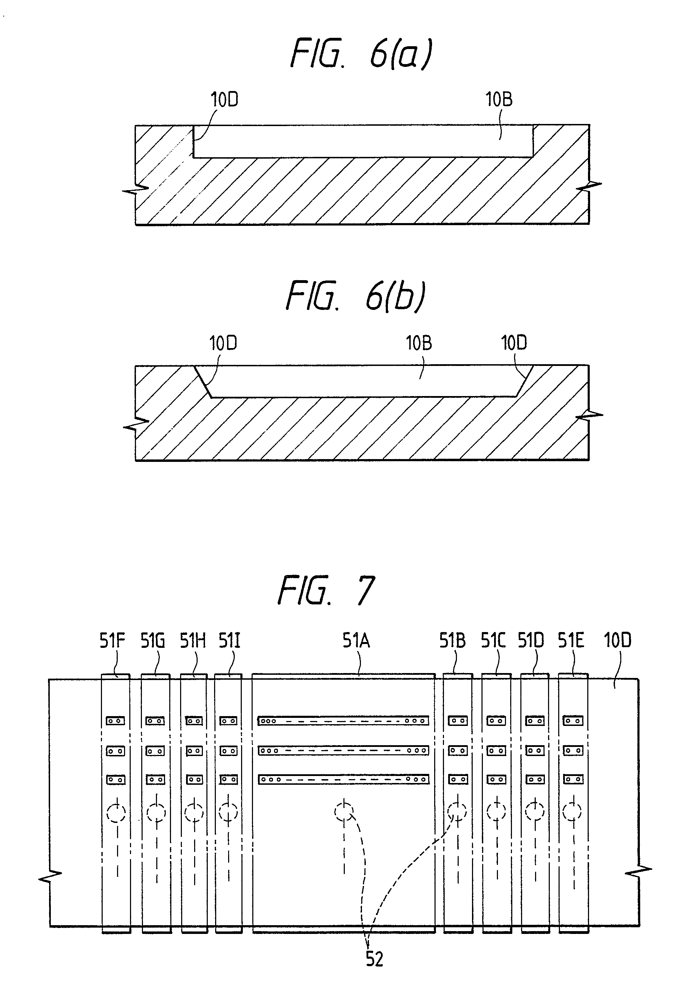

Alternatively, the bottom of each groove 10B may extend perpendicularly or obliquely to the surface of the main vacuum suction plate 10 at both the ends 10D of the groove, as shown in Fig. 6.

The cross section of each of the grooves 10B is shaped as an oblong, a semicircle, a triangle or the like, as shown in Figs. 5(a) - 5(c).

As shown in Fig. 1, a tentative sticking member 30, having an arc-shaped surface for sucking the thin stratified film 1B on the member, is removably attached by screws with an interposed heat insulator of plastic such as phenol resin, to the downstream end of the main vacuum suction plate 10. The member 30 is located downstream with regard to the direction of the feed of the thin stratified film.

The single suction chamber 51 and the single gas discharge pipe 52 may be divided into a plurality of suction chambers and a plurality of gas discharge pipes depending on the grooves 10B, if necessary. For example, the single suction chamber 51 and the single gas discharge pipe 52 may be divided into a plurality of suction chambers 51A, 51B, 51C, 51D, 51E, 51F, 51G, 51H and 51I and a plurality of gas discharge pipes 52, as shown in Fig. 7. With such dividing, each of the thin stratified films 1B whose widths are 195 mm, 245 mm, 330 mm, 400 mm, 495 mm and 600 mm can be efficiently and securely sucked on the suction surface of the main vacuum suction plate 10.

The present invention is not confined to the above-described embodiment and modifications, but may be embodied or practiced in other various ways without departing from the spirit or essential character thereof.

According to the present invention, the thin film suction surface of a thin film feed member is provided with mutually discontinuous grooves at intervals depending on the widths of thin films, so that a gas leak is not made between each of the grooves and each of the thin films. The grooves in a row are distributed at intervals in the direction of the width of each of the thin films at positions depending on the widths of the films. As a result, each of the thin films to be fed by the thin film feed member is securely sucked thereon. A suction chamber for the thin film suction surface of the member may be divided into a prescribed number of suction chambers in the direction of the width of each of the thin films depending on the widths of the films so as to securely and efficiently suck each thin film on the suction surface of the member.

## Claims

1. A thin film feed member of the type used for vacuum adhering a thin film thereto as the thin film travels toward a base plate in a thin film adhesion apparatus, said member having rows of grooves, each row having a longitudinal direction transverse to the movement direction of the thin film, and vacuum suction holes in the grooves, and vacuum means to suck air through the holes to thereby adhere a thin film to a suction surface of the thin film members, the improvement comprising:
each said row groove being discontinuous along an axis transverse to the direction of movement of said thin film and being constituted by plural groove sections, each having vacuum holes therein and edges rising to the vacuum surface of said feed member.

2. A thin film feed member as claimed in claim 1, wherein the groove sections of each row groove are distributed in said transverse direction at positions dependent upon standard widths of thin films to be fed by said feed member, whereby each such standard film will completely cover a number of said groove sections but will not partially cover any groove section.

3. A thin film feed member as claimed in claim 2, wherein said vacuum means comprises multiple vacuum chambers, each being connected to a separate column, respectively, of said groove sections.

4. A thin film feed member as claimed in any of claims 1-3, wherein each row groove has a central groove section having a length slightly less than the width of the minimum width thin film for which said feed member is designed.

5. A thin film feed member as claimed in claim 4, wherein each row groove has extreme opposite end groove sections positioned to be just covered by a thin film having a width equal to that of the largest width thin film for which said feed member is designed.

FIG. 1

# FIG. 3

10C

10D

10D

10C

10

51

10C

10B

52

10C

# FIG. 2

# FIG. 4

# FIG. 5(a)  FIG. 5(b)  FIG. 5(c)

## FIG. 6(a)

## FIG. 6(b)

## FIG. 7

## FIG. 8 PRIOR ART

## FIG. 9 PRIOR ART